# EUROPÄISCHE PATENTSCHRIFT

(11) **EP 3 742 206 B1**
(45) Veröffentlichungstag und Bekanntmachung des Hinweises auf die Patenterteilung: **18.05.2022**
(21) Anmeldenummer: 20176015.4
(22) Anmeldetag: 22.05.2020
(51) Int. Cl.: G01V 13/00, G01V 3/10, B65B 1/34, G01G 19/393

(54) **VERBESSERTE UND ERWEITERTE METALLDETEKTION IN MEHRKOPFWAAGEN**
IMPROVED AND ENHANCED METAL DETECTION IN MULTI-HEAD CARTS
DÉTECTION DES MÉTAUX AMÉLIORÉE ET ÉTENDUE DANS DES PESEUSES À TÊTES MULTIPLES

(30) Priorität: 22.05.2019 EP 19175923
(43) Veröffentlichungstag der Anmeldung: 25.11.2020
(73) Patentinhaber: Multipond Wägetechnik GmbH, 84478 Waldkraiburg (DE)
(72) Erfinder: KRÄMER, L. Wilhelm, 84544 Aschau am Inn (DE); PETERS, Andreas, 84544 Aschau am Inn (DE); ZECK, Wolfram C., 84453 Mühldorf (DE)
(74) Vertreter: Prüfer & Partner mbB Patentanwälte · Rechtsanwälte

(56) Entgegenhaltungen:
- WO-A2-2009/084964
- DE-T2- 69 530 472
- JP-B2- 3 902 584
- US-A- 4 726 434
- US-A1- 2014 190 404

## Beschreibung

In der Lebensmittelindustrie und der lebensmittelverarbeitenden Industrie werden zum Wiegen, Sortieren und Verpacken von Produkten Mehrkopfwägesysteme eingesetzt.

Mehrkopfwägesysteme verteilen einen Produktstrom aus einer Beschickungseinheit über einen Verteilteller in verschiedene Vorratsbehälter. Aus diesen Vorratsbehältern gelangen die Produkte in darunterliegende Wägeeinheiten mit Wägebehältern. Aus den gewogenen Behältern wird dann eine Kombination von Inhalten einzelner Wägebehälter der darunterliegenden Rutsche bzw. einem Sammeltrichter zugeführt, welche dem Sollwert am nächsten kommt.

Auf dem Weg in die Verpackungseinheit passiert der Produktstrom in der Regel einen Metalldetektor, bevor das Produkt von der Verpackungseinheit verpackt werden kann.

Metalldetektoren sind dahingehend ein wichtiger Bestandteil von Wäge- und Verpackungsanlagen, da metallische Fremdkörper in Lebensmitteln ein sehr hohes Gesundheitsrisiko für Konsumenten darstellen können, was dem Produzenten erheblichen finanziellen Schaden zufügen kann. Insbesondere bei scharfen Metallstücken ist eine hohe Verletzungsgefahr für den Konsumenten vorhanden.

Daher ist es für solche automatisierten Mehrkopfwäge-Verpackungssysteme wichtig, einen einwandfreien Betrieb von Metalldetektoren zu gewährleisten. Wenn ein Metallobjekt im Produktfluss detektiert wird, muss das gesamte System gestoppt werden, und/oder die kontaminierte Verpackung automatisch aus dem Verpackungsprozess ausgeschleust werden. Nur so kann vermieden werden, dass Metall im Produkt zum Konsumenten gelangt. Um dies zu gewährleisten, ist es allerdings wichtig, in regelmäßigen Abständen eine ordnungsgemäße Funktion des Metalldetektors zu prüfen und gleichzeitig sicherzustellen, dass auch während des Tests keine Kontamination am Produkt entsteht.

Vorzugsweise sollte auch gewährleistet sein, dass durch die Prüfung des Metalldetektors das Verpackungs- und Wägesystem nicht für eine längere Zeit ausfällt.

Es existieren verschiedene Möglichkeiten, einen Metalldetektor zu testen.

Grundsätzlich wird hierbei ein metallischer Prüfkörper, welcher vorzugsweise gesondert beschriftet oder gekennzeichnet ist, in den Warenstrom gebracht, welcher den Metalldetektor nach einer gewissen Zeitspanne passiert, diesen dann auslöst, und dadurch die Funktion prüft.

Eine Einbringung von Prüfkörpern kann von Hand oder durch eine Vorrichtung geschehen. Der Prüfkörper kann an verschiedenen Orten zugegeben werden, es muss allerdings sichergestellt werden, dass dieser dann auch wirklich den Metalldetektor passiert und entsprechend das Verpackungssystem erreicht.

Aus dem Stand der Technik ist das US-Patent Nr. 4,726,434 bekannt, welches ein Verfahren zum Testen des Prozesses des Metalldetektors beschreibt, wobei das Ausschleusen automatisiert ist. Es wird in bestimmten Zyklen manuell oder durch ein gesteuertes Förderband ein Prüfkörper an einem spezifischen Ort, beispielsweise dem Vorrats- oder Wägebehälter, in den Warenstrom der Mehrkopfwaage eingebracht. Durch die gleichmäßige Förderung einer Dosierkarusselleinrichtung mit festgelegtem Ort der Einbringung kann eine Wanderung des Prüfkörpers gut nachvollzogen werden. Eine Verpackung, welche den Prüfkörper erhält, kann mittels eines Registers auf der Förderlinie nach dem Übergabesystem lokalisiert werden, und durch einen mechanischen Hebel aus dem normalen Förderstrom ausgeschleust werden. Hier besteht die Zuführvorrichtung der Prüfkörper aus einem gesteuerten Band, auf dem Transportschalen befestigt sind, welche Prüfkörper beinhalten. Es ist schwierig, solche Förderbänder hygienegerecht auszugestalten, und ferner kann nicht immer sichergestellt werden, dass wirklich nur ein Prüfkörper zugeführt wird. Eine Kontrolle des Füllstands ist ebenso wenig vorgesehen und gestaltet sich aufgrund der Funktionsvereinigung aus Transport und Bevorratung schwierig. Ferner entstehen beim manuellen Einbringen des Prüfkörpers kurze Leerlaufzeiten. Ferner wird es nicht ermöglicht, gezielt eine Testreihe mit verschiedenen Prüfkörpern durchzuführen. Im Falle einer Ko-Kontamination während eines Tests, in dem also ein weiteres metallisches Objekt außer dem Prüfkörper vorhanden ist, könnte dieses weitere metallische Objekt im Produkt verbleiben und nicht detektiert werden. Es kann somit unbemerkt eine metallische Kontamination erfolgen, welche bis zum Endverbraucher gelangt und eben dort Schäden verursachen kann.

Das US-Patent Nr. 6822171 beschreibt das Testsystem mit einem Testkörper, wobei dieses Testsystem mit einem Ausfahrmechanismus oberhalb des Metalldetektors versehen ist. Im Produktstrom lässt sich dieser Ausfahrmechanismus aus- und wieder einfahren. Es kann ein Test mit laufendem Produktstrom durchgeführt werden, Leerlaufzeiten können vermieden werden, jedoch entsteht der Nachteil, dass der ausgefahrene Messarm den Produktfluss behindern kann und somit die Zykluszeit während des Tests deutlich verlängern kann. Zusätzlich kann die Messsonde in Kontakt zum Produkt kommen und kann dieses Produkt verunreinigen. Eine solche Messsonde lässt sich nach dem Einfahren ferner nur schwer reinigen und kann beim nächsten Test zur Verunreinigung von verwogenen Nahrungsmitteln führen. Ferner kann während eines Tests ein weiterer metallischer Körper den Sensor unbemerkt passieren, kann mitverpackt werden und zum Endverbraucher gelangen. Ein Test mit verschiedenen Prüfkörpern ist auch nicht ohne weiteres möglich, dieses Konzept lässt sich auch nicht auf alle Rutschen und Sammelbehälter anpassen, welche standardmäßig in einer Mehrkopfwaage beinhaltet sind.

Dokument DE 695 30 472 T2 beschreibt eine Kombinationswaage, in der die Fördereffizienz eines Ziel-Dosierobjekts von einem Trichter der oberen Stufe zu einem Trichter der unteren Stufe verbessert wird. Zu diesem Zweck werden die Richtung, in die eine Bodenplatte eines Beckentrichters bewegt wird, um die untere offene Fläche eines zylindrischen Körpers zu öffnen, und die Richtung, in die eine Bodenplatte eines Dosiertrichters einer unteren Stufe bewegt wird, um die untere offene Fläche eines zylindrischen Körpers zu schließen, gleich eingestellt. Auch die Richtung, in der die Bodenplatte des Dosiertrichters bewegt wird, um die untere offene Fläche des zylindrischen Körpers zu öffnen, und die Richtung, in der eine Bodenplatte eines Zeitsteuertrichters der unteren Stufe bewegt wird, um die untere offene Fläche eines zylindrischen Körpers zu öffnen, sind gleich eingestellt. Wenn also die Bodenplatte des Trichters der unteren Stufe in Schließrichtung bewegt wird, wird die Bodenplatte des Trichters der oberen Stufe fast gleichzeitig in Öffnungsrichtung bewegt, so dass das Ziel-Dosierobjekt im Trichter der oberen Stufe effizient in den Trichter der unteren Stufe überführt werden kann.

Die europäische Patentanmeldung EP 19 175 923.2, deren Priorität für einen Teil der vorliegenden Anmeldung beansprucht wird, offenbart eine Abwurfvorrichtung für Prüfkörper eines Metalldetektionssystems, wobei hier insbesondere ein Magazin vorgesehen ist, was dazu in der Lage ist, mehrere Prüfkörper zu lagern. Die Abwurfvorrichtung beinhaltet ferner eine Transportvorrichtung für Prüfkörper mit einem Schwenkarm, wobei diese Transportvorrichtung Prüfkörper aus dem Magazin aufnehmen kann und über eine Öffnung bewegbar ist, in welcher ein Prüfkörper gezielt in eine Waage abwerfbar ist. Diese Transportvorrichtung ist auch in der dritten Ausführungsform der vorliegenden Anmeldung involviert. Durch dieses System kann eine Vorratskontrolle des Magazins durchgeführt werden, da ein Sensor erfassen kann, wie viele Prüfkörper noch im Magazin gelagert sind. Entsprechend kann die Mehrkopfwaage gesteuert werden, da das System immer weiß, ob noch genügend Prüfkörper für weitere Prüfungen im Magazin vorhanden sind. Die Kapazität des Magazins ist allerdings beschränkt, und wenn mehrere Metall-Checks im Laufe einer längeren Zeiteinheit durchgeführt werden sollen, müsste dieses Magazin höher ausgeführt werden, was nicht immer möglich ist (wegen einer möglichen Höhenbeschränkung durch Decken in Fabrikationshallen bzw. weiteren Maschinenteilen). Ferner muss das Magazin nach jedem Check wieder von Hand aufgefüllt werden, was einen vollautomatischen Betrieb nicht zulässt.

Es ist daher eine Aufgabe der vorliegenden Erfindung, eine verbesserte Abwurfvorrichtung für Prüfkörper mit erweiterter Funktionalität zur Verfügung zu stellen, und eine platzsparende Lösung, welche auch vollautomatisch betrieben werden kann, bereitzustellen.

Die Aufgabe wird gelöst durch eine Abwurfvorrichtung gemäß Anspruch 1, einem System gemäß Anspruch 11 oder 12 sowie einem Verfahren gemäß Anspruch 13 oder 14. Weitere vorteilhafte Ausgestaltungen sind Gegenstand der abhängigen Ansprüche. Eine erfindungsgemäße Abwurfvorrichtung für Prüfkörper für Metelldetektionssysteme für Mehrkopfwaagen umfasst mindestens ein Magazin, welches dazu angepasst ist, mindestens einen Prüfkörper hierin aufzunehmen, wobei im Magazin mindestens zwei Prüfkörperlageröffnungen vorgesehen sind, welche sich durch das Magazin von oben nach unten erstrecken, und wobei ferner eine Begrenzungsvorrichtung vorgesehen ist, welche unterhalb des Magazins angeordnet ist. Diese hält die Prüfkörper im Magazin. Die Begrenzungsvorrichtung weist eine Aussparung auf, welche mindestens den gleichen Querschnitt aufweist wie ein Prüfkörper. Dadurch wird bewirkt, dass, wenn die entsprechende Prüfkörperlageröffnung des Magazins oberhalb der Aussparung vorgesehen ist, ein oder mehrere Prüferkörper nach unten abgeworfen werden kann/können, also in das Wägesystem. Ferner beinhaltet die erfindungsgemäße Abwurfvorrichtung mindestens einen Antrieb, welcher dazu angepasst ist, das Magazin zu bewegen, so dass verschiedene Prüfkörperlageröffnungen oberhalb der Aussparung positioniert werden können - so dass zwischen mehreren Prüfkörperlageröffnungen ausgewählt werden kann, die jeweils in Abwurfposition gebracht werden können.

Das Vorsehen eines Magazins, welches beweglich ist, bietet die Möglichkeit, eine Vielzahl an Prüfkörpern unterzubringen, ohne hierbei jedoch zu stark in die Höhe zu bauen. Ferner ist der Abwurf von Prüfkörpern aus dem Magazin oberhalb einer Aussparung einer Begrenzungsvorrichtung sehr einfach realisierbar, so dass die Abwurfvorrichtung sicher und kostengünstig realisiert werden kann.

Ferner erlaubt ein Magazin eine gewisse Automatisierung, da mehrere Positionen bzw. Prüfkörperlageröffnungen vorgesehen werden können, welche in Summe sehr viele Prüfkörper aufnehmen können, welche alle vollautomatisch über die Aussparung mit der Begrenzungsvorrichtung bewegt werden können.

Ferner erlaubt es das Magazin, dass auch verschiedene Prüfkörper im Magazin untergebracht werden können, so dass der gezielte Abwurf von verschiedenen Prüfkörpern (beispielsweise in einer Sequenz) ermöglicht wird.

Weiterhin kann ein höherer Automatisierungsgrad bis hin zur Vollautomatisierung erreicht werden.

Die Planung der Metallchecks kann über längere Zeitspannen erfolgen, beispielsweise über das Wiegen und die Verpackung einer ganzen Produktcharge.

Ferner kann durch diese Abwurfvorrichtung eine erhöhte Sicherheit des Metallchecks erreicht werden.

Vorzugsweise weist die Abwurfvorrichtung mehrere Prüfkörperlageröffnungen auf, deren jeweilige Mittelpunkte auf einem Kreis liegen, wobei der Antrieb dazu angepasst ist, das Magazin um den Kreismittelpunkt zu drehen. Durch das Vorsehen der Mittelpunkte der Prüfkörper auf einem Kreis können sehr viele Prüfkörperlageröffnungen im Magazin angeordnet werden, und durch Vergrößern des Radius des Kreises erhöht sich somit die mögliche Anzahl der Prüfkörperlageröffnungen.

Weiter vorzugsweise weist die Abwurfvorrichtung mindestens einen ersten Sensor auf, welcher dazu angepasst ist, das Vorhandensein und/oder Eigenschaften von Prüfkörpern, welche im Magazin lagern, zu detektieren. Das sind beispielsweise optische Sensoren oder Metalldetektoren, oder andere Arten von Sensoren, welche einfach bestimmen können, welche Prüfkörperlageröffnungen im Magazin auch tatsächlich mit Prüfkörpern belegt sind. So kann das System vollautomatisch einen Überblick darüber gewinnen, wie viele Prüfkörper zum Abwurf bereitstehen.

Weiter vorzugsweise ist der erste Sensor ein optischer Distanzsensor, dessen Lichtstrahl vorzugsweise parallel zur Hauptachse vom Magazin verläuft. Ein optischer Distanzsensor kann sehr leicht und kostengünstig und auch zuverlässig bestimmen, ob in einer Prüfkörperlageröffnung ein Prüfkörper vorhanden ist.

Vorzugsweise weist die Abwurfvorrichtung einen zweiten Sensor auf, welcher dazu angepasst ist, den Metallgehalt und/oder die Farbe der im Magazin lagernden Prüfkörper zu detektieren. Dadurch ist es beispielsweise möglich, mehrere verschiedene Prüfkörper im Magazin vorzusehen und diese auch sicher zu detektieren - die Prüfkörper können z.B. jeweils verschiedene Farben haben, aus einer unterschiedlichen Legierung gefertigt sein oder sich auch in der Form unterscheiden.

Weiter vorzugsweise beinhaltet die Abwurfvorrichtung eine Auswerteeinheit, welche dazu eingerichtet ist, die Signale des mindestens einen Sensors zu verarbeiten. Vorzugsweise werden die Signale vom ersten und vom zweiten Sensor verarbeitet. Dadurch kann das System sehr einfach Informationen über die Belegung des Magazins sowie über die darin enthaltenen Prüfkörper erlangen und entsprechend für ein Prüfverfahren verwenden.

Weiter vorzugsweise weist das Magazin mindestens eine seitliche Öffnung oder mindestens einen teilweise durchsichtigen Abschnitt auf, wodurch eine optische Sichtprüfung des Füllstands des Magazins ermöglicht werden kann. Dies können beispielsweise Löcher in der Wand der Prüfkörperlageröffnungen sein, oder Teile des Magazins können aus einem durchsichtigen Material, wie beispielsweise Plexiglas, ausgebildet sein.

Vorzugsweise ist das Magazin dazu angepasst, in einer Prüfkörperlageröffnung mehrere Prüfkörper übereinander aufzunehmen. In diesem Fall lässt sich die Kapazität des Magazins beliebig erweitern, und ferner sind dann mehrere Prüfkörperlageröffnungen vorhanden, welche jeweils mit mehreren Prüfkörpern befüllt werden können, wobei jede jeweilige Prüfkörperlageröffnung mit einer Sorte eines Prüfkörpers befüllt werden kann. Somit lassen sich sehr einfach verschiedene Prüfkörper abwerfen, und es kann ein größerer Vorrat von Prüfkörpern im Magazin aufgenommen werden.

Weiter vorzugsweise ist an der Aussparung eine Vereinzelungsvorrichtung vorgesehen. Diese bewirkt, dass, wenn eine Prüfkörperlageröffnung oberhalb der Aussparung vorhanden ist, in welcher mehrere Prüfkörper gestapelt sind, der Abwurf dieser Prüfkörper trotzdem kontrolliert werden kann. Es besteht also dann die Möglichkeit, dass nicht sämtliche Prüfkörper aus einer Prüfkörperlageröffnung abgeworfen werden, sondern der Abwurf der Prüfkörper in einer Prüfkörperlageröffnung sequentiell erfolgen kann, beispielsweise alle 10 Minuten oder jede Stunde, oder je nach Bedarf.

Dadurch wird es auch ermöglicht, dass die jeweiligen Prüfkörperlageröffnungen mit verschiedenartigen Prüfkörpern beladen werden können, aber trotzdem ein geregelter Abwurf möglich ist. Auch können verschiedene Prüfkörper sequentiell abgeworfen werden, indem sich das Magazin dreht und innerhalb einer bestimmten Zeiteinheit verschiedene Prüfkörperlageröffnungen oberhalb der Aussparung und Vereinzelungsvorrichtung positioniert werden können und jeweils einer oder mehrere Abwürfe stattfinden.

In einer zweiten Ausführungsform weist die Vereinzelungsvorrichtung auf: Ein erstes horizontales Element mit einer ersten Öffnung, welche mindestens den Durchmesser eines Prüfkörpers aufweist, einen Schwenkarm, welcher mittels eines Antriebs zwischen mindestens zwei Positionen bewegbar ist, eine Transportvorrichtung für Prüfkörper, welche mit dem Schwenkarm verbunden ist, welche aufweist: Ein zweites horizontales Element, welches eine zweite Öffnung aufweist, welche mindestens den Durchmesser eines Prüfkörpers aufweist, wobei unter der zweiten Öffnung eine Aufnahmevorrichtung befestigt ist. Der Schwenkarm kann eine erste Position einnehmen, in welcher sich die zweite Öffnung des zweiten horizontalen Elements unterhalb des Magazins (bzw. der ausgewählten Prüfkörperlageröffnung) befindet, so dass ein Prüfkörper aus dem Magazin durch die zweite Öffnung des zweiten horizontalen Elements in die Aufnahmevorrichtung fallen kann. In einer zweiten Position, welche der Schwenkarm einnehmen kann, befindet sich die Aufnahmevorrichtung über der ersten Öffnung des ersten horizontalen Elements, so dass der sich in der Aufnahmevorrichtung befindliche Prüfkörper durch die erste Öffnung des ersten horizontalen Elements abgeworfen werden kann.

Das zweite horizontale Element verhindert in jeder von der ersten Position verschiedenen Position des Schwenkarms das Nachfallen von weiteren Prüfkörpern aus dem Magazin.

So ist sehr sicher und sehr zuverlässig der Abwurf von mehreren Prüfkörpern aus einer Prüfkörperlageröffnung vorzunehmen. Ferner bietet diese Ausführungsform eine hygienegerechte und sichere Gestaltung der Sensoranlage und der Abwurfvorrichtung, auch ein Ablösen von Bauteilen der Abwurfvorrichtung wird somit verhindert. Ferner weist diese Anordnung den großen Vorteil auf, dass Fehlabwürfe vermieden werden können, da die zweite Öffnung des zweiten horizontalen Elements, welche unter dem Magazin positioniert ist, sowie die erste Öffnung des ersten horizontalen Elements, durch die ein Prüfkörper abgeworfen wird, nicht untereinander angeordnet sind. Zum Transport eines Prüfkörpers in horizontaler Ebene ist somit die Transportvorrichtung zuständig, und Prüfkörper auf dem Magazin können durch eine Fehlfunktion nicht direkt in die Mehrkopfwaage abgeworfen werden.

Die Erfindung beinhaltet ferner ein System aus der Abwurfvorrichtung und zumindest einem Prüfkörper und einer Mehrkopfwaage, wobei die Mehrkopfwaage unter anderem einen Verteilteller, mehrere Wägebehälter, einen Sammeltrichter, eine Verpackungseinheit sowie einen Metalldetektor aufweist. Die Aussparung der Abwurfvorrichtung ist dann über dem Verteilteller oder einem Wägebehälter der Mehrkopfwaage angeordnet, und der Metalldetektor ist nur am oder nahe des Sammeltrichters oder der Verpackungseinheit vorgesehen.

Ein System gemäß einer zweiten Ausführungsform umfasst ebenfalls die Abwurfvorrichtung gemäß der zweiten Ausführungsform der vorliegenden Erfindung sowie mindestens einen Prüfkörper und eine Mehrkopfwaage, welche unter anderem einen Verteilteller, mehrere Wägebehälter, einen Sammeltrichter, eine Verpackungseinheit sowie einen Metalldetektor sowie optional mehrere Vorratsbehälter aufweist. Hier ist die erste Öffnung des ersten horizontalen Elements der Abwurfvorrichtung über dem Verteilteller oder einem Wägebehälter sowie optional Vorratsbehälter der Mehrkopfwaage angeordnet, und der Metalldetektor ist ebenfalls am oder nahe des Sammeltrichters oder der Verpackungseinheit vorgesehen.

Ein Verfahren zum Prüfen eines Metalldetektors (MD) einer Mehrkopfwaage oder einer Verpackungseinheit (E) mit einer Abwurfvorrichtung gemäß einer ersten Ausführungsform der vorliegenden Erfindung umfasst die folgenden Schritte:
a) Prüfen, ob im Magazin ein Prüfkörper enthalten ist, optional, ob ein für den kommenden Abwurf vorgesehener Prüfkörper enthalten ist;
b) falls in Schritt a) ein positives Ergebnis erzielt wird: Bewegen einer Prüfkörperlageröffnung, welche einen Prüfkörper enthält, über die Aussparung; falls in Schritt a) ein negatives Ergebnis erzielt wird: Aufforderung zum Auffüllen des Magazins;
c) Prüfen, ob der Metalldetektor der Mehrkopfwaage oder der Verpackungseinheit den Prüfkörper detektiert; Ausgabe und/oder Speichern eines positiven oder negativen Ergebnisses.

Hiermit wird ein einfaches und schnelles Abwerfen der Prüfkörper ermöglicht.

Ein alternatives Verfahren zum Prüfen eines Metalldetektors einer Mehrkopfwaage oder einer Verpackungseinheit mittels einer Abwurfvorrichtung gemäß einer zweiten oder dritten Ausführungsform der vorliegenden Erfindung umfasst die folgenden Schritte:
a) Prüfen, ob im Magazin mindestens eine Art von Prüfkörpern in einer Prüfkörperlageröffnung enthalten ist, optional, ob ein für den kommenden Abwurf vorgesehener Prüfkörper enthalten ist;
   optional: Prüfen, ob im Magazin mindestens eine weitere Art von Prüfkörpern in einer anderen Prüfkörperlageröffnung enthalten ist;
b) Detektieren der Menge n an Prüfkörpern in der einen Prüfkörperlageröffnung;
   optional: Detektieren der Menge m an Prüfkörpern in der anderen Prüfkörperlageröffnung;
c) Bewegen der einen Prüfkörperlageröffnung, so dass diese oberhalb der Aussparung positioniert ist;
d) Abwerfen von Prüfkörpern aus der einen Prüfkörperlageröffnung durch Betätigen der Vereinzelungsvorrichtung, wobei die Vereinzelungsvorrichtung vorzugsweise n Mal betätigt wird, wobei zwischen den Abwürfen eine festgelegte Zeitspanne Δt liegt;
e) optional: Bewegen der anderen Prüfkörperlageröffnung, so dass diese oberhalb der Aussparung positioniert ist;
f) Abwerfen von Prüfkörpern aus der anderen Prüfkörperlageröffnung durch Betätigen der Vereinzelungsvorrichtung, wobei die Vereinzelungsvorrichtung vorzugsweise m Mal betätigt wird, wobei zwischen den Abwürfen eine festgelegte Zeitspanne Δt liegt.

Durch ein solches Verfahren wird es ermöglicht, dass verschiedene Prüfkörper verwendbar sind und sequentiell abgeworfen werden können.

Vorzugsweise können Prüfkörper P aus der Mehrkopfwaage M bzw. der Verpackungseinheit E mit der Rückführvorrichtung 9 wieder zurück in die Abwurfvorrichtung 1 bzw. in ein Magazin 2, 20 hiervon befördert werden.

Im Folgenden wird eine bevorzugte Ausführungsform der vorliegenden Erfindung unter Bezugnahme auf die anliegenden Figuren näher beschrieben.
- Fig. 1: zeigt eine Abwurfvorrichtung gemäß einer ersten Ausführungsform der vorliegenden Erfindung in isometrischer Ansicht.
- Fig. 2: zeigt ebenfalls eine Abwurfvorrichtung gemäß einer ersten Ausführungsform der vorliegenden Erfindung, wobei hier noch zusätzlich zwei Sensoren angeordnet sind.
- Fig. 3: zeigt eine Abwurfvorrichtung gemäß einer zweiten Ausführungsform der vorliegenden Erfindung, wobei hier mehrere Prüfkörper abgeworfen werden können.
- Fig. 4: zeigt eine dritte Ausführungsform der vorliegenden Erfindung, wobei hier ebenfalls in einem Magazin mehrere Prüfkörper übereinander aufgenommen werden können, jedoch ein Verdrehen des Magazins und das Abwerfen des Prüfkörpers unabhängig voneinander möglich sind.
- Fig. 5: zeigt mehrere Zustände der Abwurfvorrichtung gemäß Fig. 4, wobei hier fünf verschiedene Betriebszustände abgebildet sind.
- Fig. 6: zeigt eine ganze Mehrkopfwaage inklusive Abwurfvorrichtung gemäß der vorliegenden Erfindung und eine darunter angeordnete Verpackungseinheit (-maschine), wobei hier ferner eine Rückführvorrichtung vorgesehen ist, welche Prüfkörper aus der Mehrkopfwaage bzw. der Verpackungseinheit wieder zurück in die Abwurfvorrichtung bzw. in einem Magazin hiervon befördert.

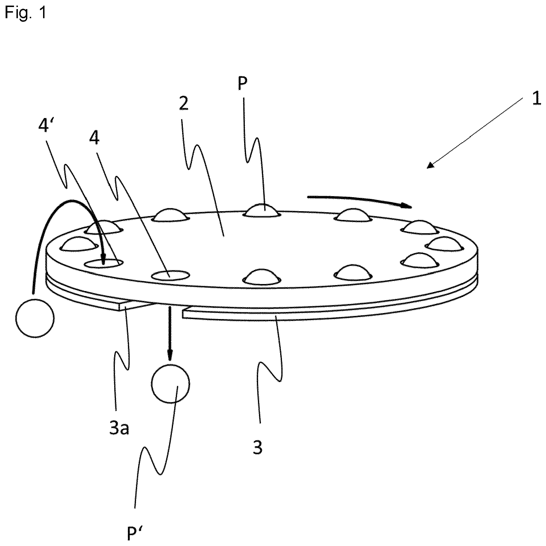

Fig. 1 zeigt eine Abwurfvorrichtung gemäß der ersten Ausführungsform der vorliegenden Erfindung. Die Abwurfvorrichtung 1 enthält hier ein Magazin 2, welches als ebene flache Scheibe ausgestaltet ist. Im Magazin 2 sind mehrere Prüfkörperlageröffnungen 4, 4' vorgesehen, in welchen Prüfkörper P mit Spiel einsetzbar bzw. lagerbar sind. Unterhalb des Magazins 2 angeordnet ist eine Begrenzungsvorrichtung 3, welche eine Aussparung 3a aufweist. Die Aussparung 3a ist so groß, dass, falls eine Prüfkörperlageröffnung 4 direkt oberhalb der Aussparung 3a platziert wird, ein Prüfkörper P' durch die Aussparung 3a abgeworfen werden kann. Das Magazin 2 enthält ferner einen Antrieb 5 (hier nicht dargestellt).

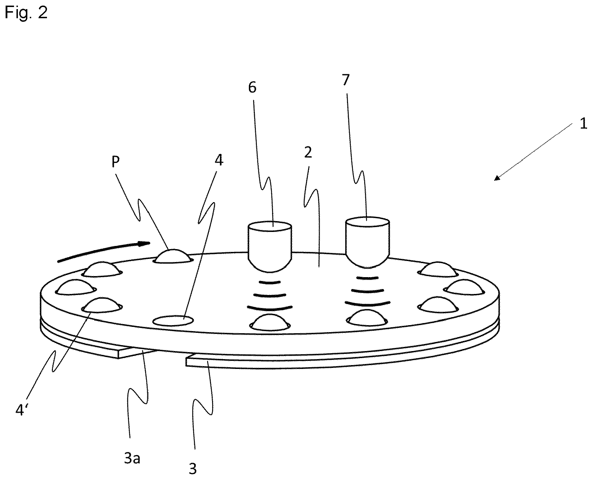

Fig. 2 zeigt eine ähnliche isometrische Ansicht der Abwurfvorrichtung 1 wie Fig. 1, nur dass hier zusätzlich noch zwei Sensoren 6 und 7 vorgesehen sind. Diese Sensoren sind in einem gewissen Abstand voneinander angeordnet, im vorliegenden Fall wie zwei Prüfkörperlageröffnungen 4 und 4' des Magazins 2. Die Sensoren 6 und 7 können berührungslos detektieren, in welchen Prüfkörperlageröffnungen 4, 4' des Magazins 2 Prüfkörper gelagert sind und in welchen nicht, sowie Eigenschaften der Prüfkörper wie z.B. Farbe, Metallgehalt usw. bestimmen. Unterhalb des Magazins 2 ist wiederum eine Begrenzungsvorrichtung 3 angeordnet, welche eine Aussparung 3a aufweist.

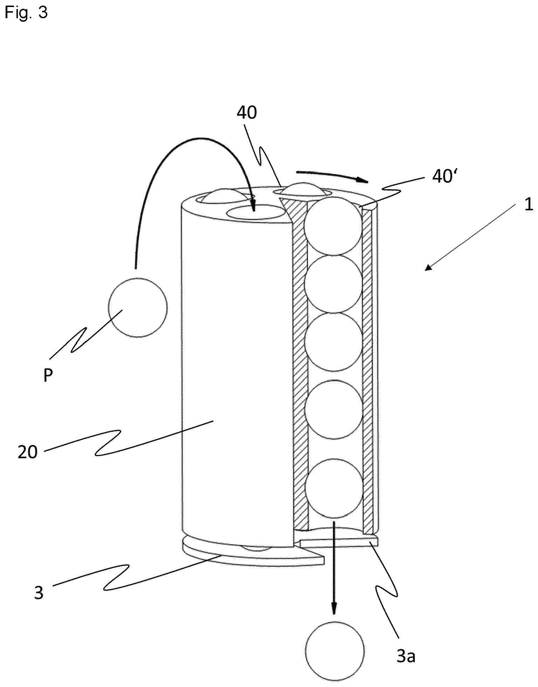

Fig. 3 zeigt eine Abwurfvorrichtung 1 gemäß einer zweiten Ausführungsform der vorliegenden Erfindung, in isometrischer Ansicht und Teilschnittansicht. Hier ist das Magazin 20 zylinder- bzw. walzenförmig ausgebildet, wobei sich ebenfalls Prüfkörperlageröffnungen 40, 40' über die gesamte Länge des Magazins 20 erstrecken. Ebenfalls ist unterhalb des Magazins 20 wiederum eine Begrenzungsvorrichtung 3 mit einer Aussparung 3a angeordnet, ähnlich wie in der ersten Ausführungsform. In dieser Ausführungsform können in einer Prüfkörperlageröffnung 40, 40' mehrere Prüfkörper P gelagert werden. Wenn das Magazin entsprechend höher gebaut wird oder die Prüfkörper kleiner ausgestaltet sind, ist auch Kapazität für mehr Prüfkörper P vorhanden. Das Magazin 20 enthält ferner einen Antrieb 5 (hier nicht gezeigt), welcher dazu angepasst ist, es zu drehen.

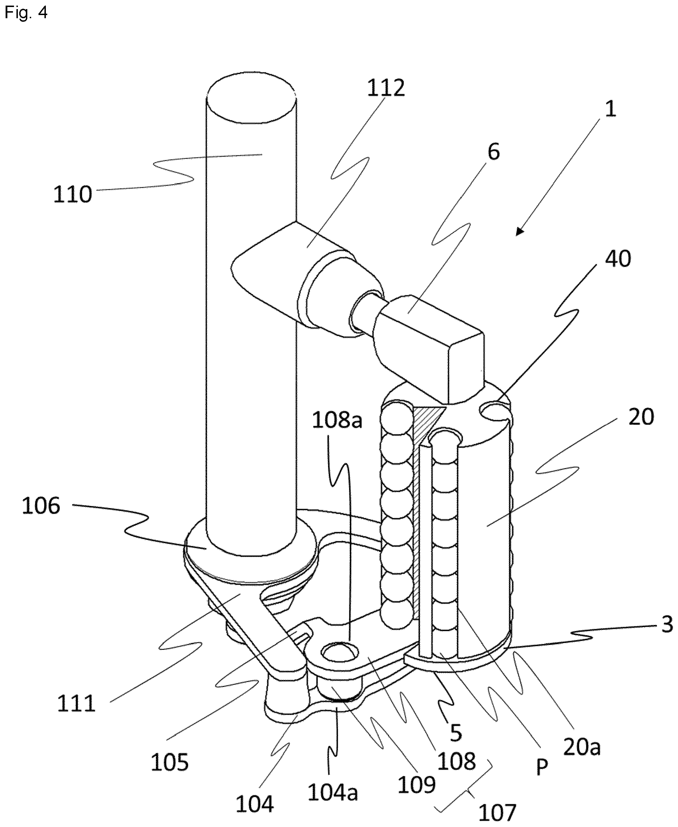

Fig. 4 zeigt eine dritte Ausführungsform der Abwurfvorrichtung 1 der vorliegenden Erfindung. Hier wird ähnlich wie in der zweiten Ausführungsform ein Magazin 20 mit Begrenzungsvorrichtung 3 in säulen- bzw. walzenförmiger Ausgestaltung vorgesehen, in dessen Prüfkörperlageröffnungen 40 mehrere Prüfkörper P übereinander lagerbar sind. Das Magazin ist durch einen Antrieb 5 (hier nur schematisch angedeutet) drehbar. Das Magazin 20 ist auf einem Halter 111 angebracht. Unter dem Halter ist mit gewissem Abstand ein erstes horizontales Element 104 montiert, welches eine erste horizontale Öffnung 104a aufweist. Ferner ist ein Schwenkarm 105 offenbart, dessen eines Ende mit einem Antrieb 106 (hier nur schematisch gezeigt) verbunden ist, welcher in einem zylindrischen Gehäuse 110 angeordnet ist, und dessen anderes Ende mit einer Transportvorrichtung 107 verbunden ist, welche ein zweites horizontales Element 108 mit einer zweiten Öffnung 108a sowie eine Aufnahmevorrichtung 109, welche verbunden sind, aufweist. In dieser Ausführungsform ist die Aufnahmevorrichtung 109 als Hohlzylinder ausgeführt. In dieser Ansicht ist eine Position vom Schwenkarm gezeigt, in welchem sich der Hohlzylinder 109 direkt oberhalb der ersten Öffnung 104a des ersten horizontalen Elements 104 befindet. Unterhalb des Magazins 20 ist das zweite horizontale Element 108 vorhanden, auf welchem der unterste Prüfkörper P, welcher aus dem Magazin herausgeglitten ist, aufliegt. Dieser ist jedoch nicht komplett aus dem Magazin 20 hervorgetreten, so dass dieser sich in einer sicheren Position befindet und somit nicht herausfallen kann. Ferner ist am zylindrischen Gehäuse 110 noch ein Sensorhalter 112 angebracht, an welchem der Sensor 6 angebracht ist. In dieser Ausführungsform ist der Sensor 6 ein optischer Sensor, welcher direkt über dem Magazin 20 angeordnet ist und somit den Füllstand des Magazins entsprechend detektieren kann.

Dieser Sensor kann also dazu beitragen festzustellen, ob im Magazin 20 noch genügend Prüfkörper P vorhanden sind. Dies kann auch über seitliche Öffnungen 20a im Magazin geschehen. Diese dienen auch der besseren Reinigbarkeit und somit einer hygienegerechten Gestaltung.

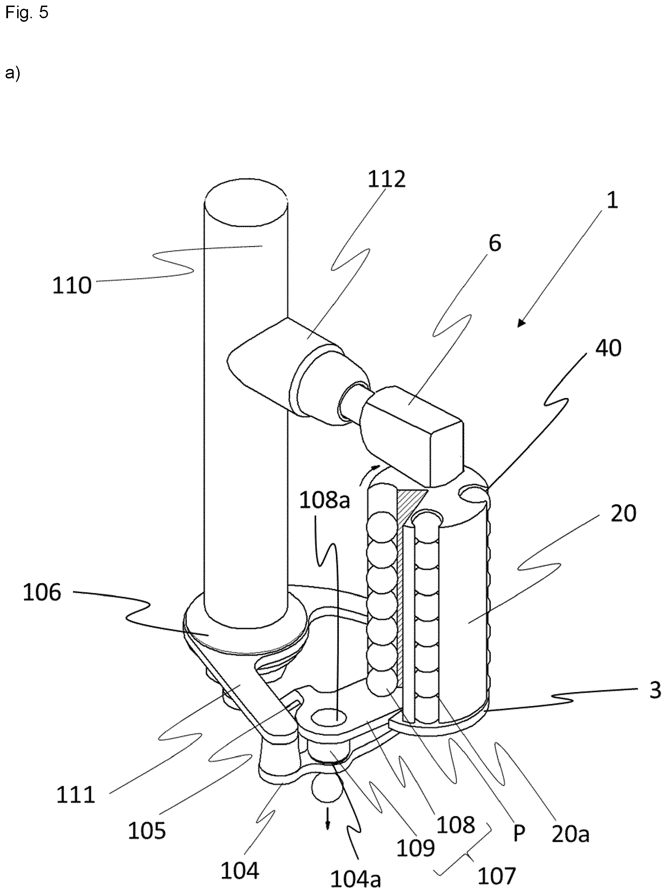

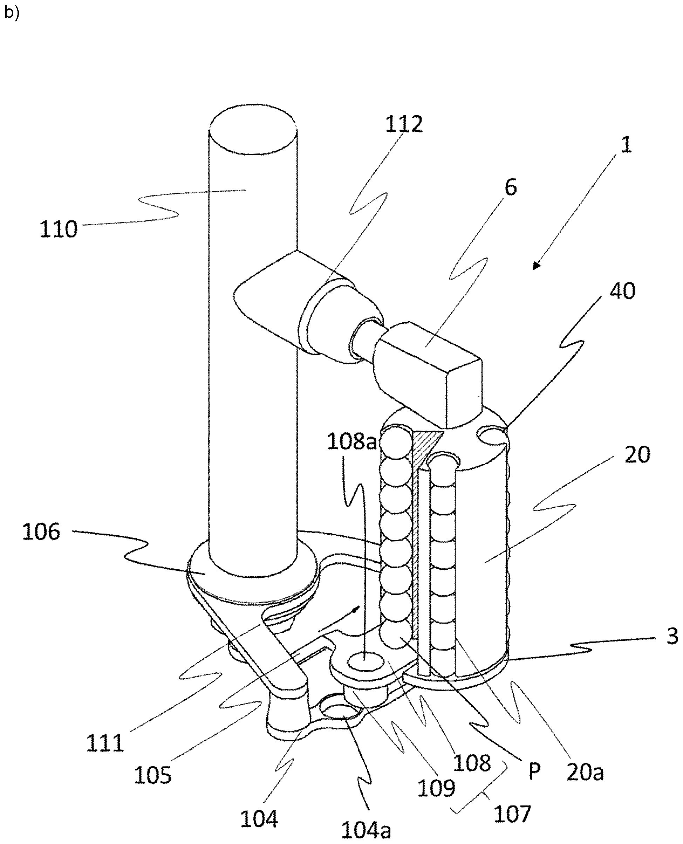

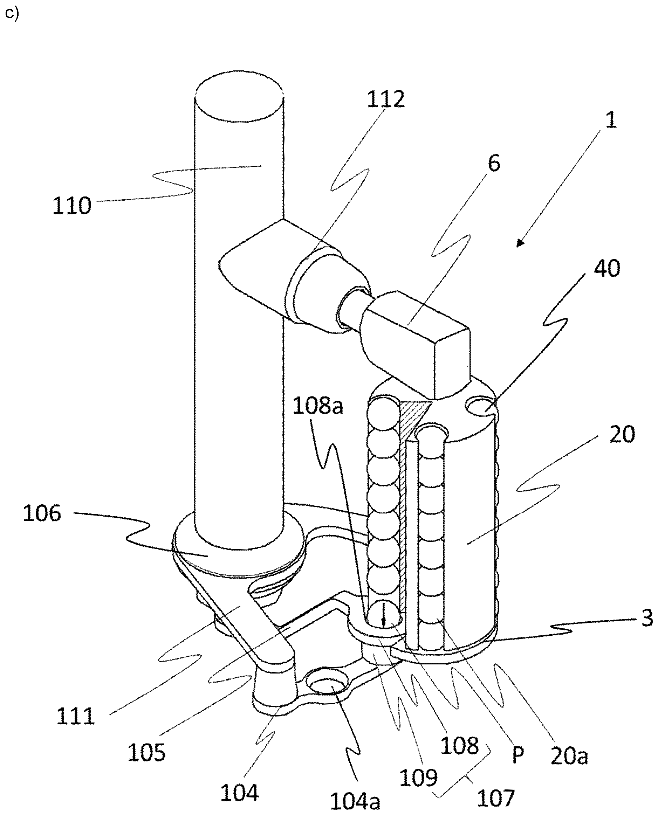

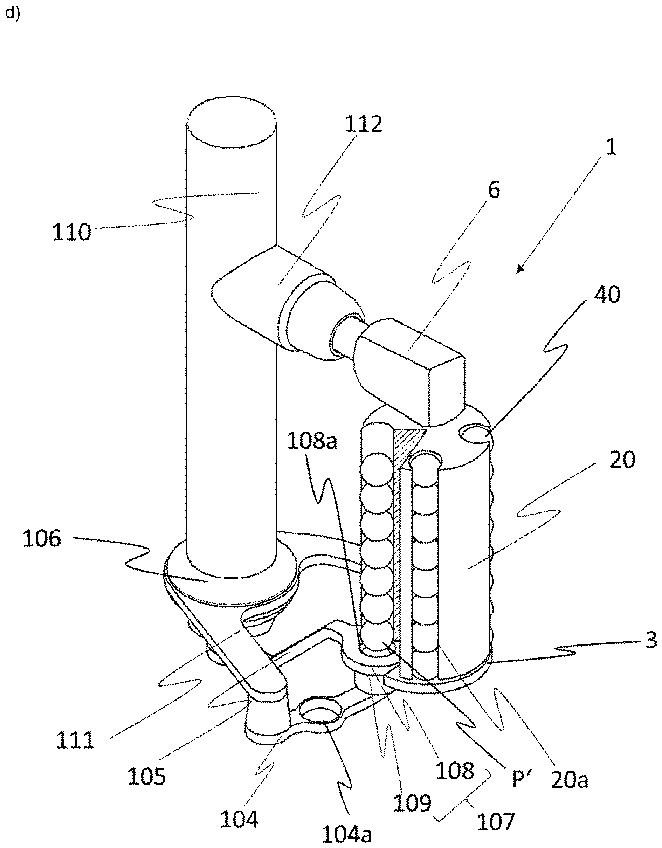

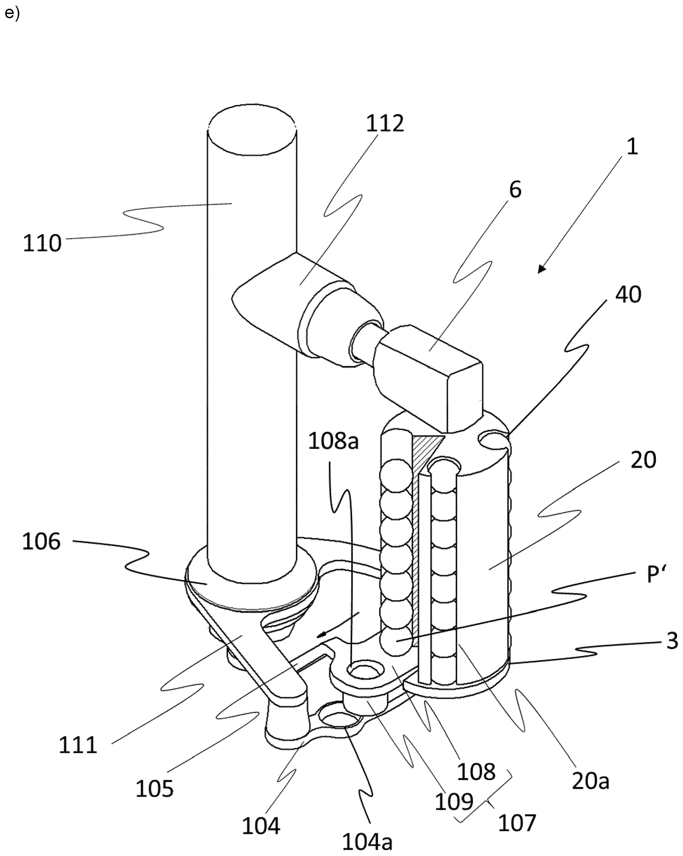

Fig. 5 zeigt mehrere Zustände einer Abwurfvorrichtung 1 gemäß Fig. 4. Es wird hier davon ausgegangen, dass sich jeweils immer eine bestimmte Prüfkörperlageröffnung 40 in einer Abwurfposition befindet. Es sind hier fünf verschiedene Zustände (a) bis (e) dargestellt.

Grundsätzlich existiert eine erste Position P1, in der die zweite Öffnung 108a des zweiten horizontalen Elements 108 unterhalb des Magazins 20 positioniert ist, so dass ein Prüfkörper aus dem Magazin durch die zweite Öffnung 108a des zweiten horizontalen Elements 108 in die Aufnahmevorrichtung 109 fallen kann.

In einer zweiten Position P2 befindet sich die Aufnahmevorrichtung 109 über der ersten Öffnung 104a des ersten horizontalen Elements 104, so dass der sich in der Aufnahmevorrichtung 109 befindliche Prüfkörper P durch die erste Öffnung 104a des ersten horizontalen Elements 104 abgeworfen werden kann, um somit in/auf eine Mehrkopfwaage abgeworfen zu werden.

Im Zustand (a) wurde gerade ein Prüfkörper abgeworfen. Somit ist der Hohlzylinder 109 direkt über der ersten Öffnung 104a des ersten horizontalen Elements 104 positioniert. Dementsprechend ist die Stellung des Schwenkarms in der zweiten Position P2 gemäß obiger Definition. Auf dem zweiten horizontalen Element 108 liegt ein Prüfkörper P auf, welcher das Magazin 20 teilweise verlassen hat. Dessen weiteres Herabfallen wird aber durch das zweite horizontale Element 108 verhindert. Das Magazin 20 ist auf dem Halter 111 angeordnet. Der Schwenkarm 105 verbindet den Antrieb 106 (hier nicht gezeigt), welcher im zylindrischen Gehäuse 110 untergebracht ist, mit der Transportvorrichtung 107, welche aus dem zweiten horizontalen Element 108, der zweiten Öffnung 108a sowie dem Hohlzylinder 109 besteht. Über einen Sensorhalter 112 ist ein optischer Sensor 6 oberhalb des Magazins 20 vorgesehen. Das zweite horizontale Element 108 und die Begrenzungsvorrichtung 3 unter dem Magazin 20 sind bündig.

Das Magazin 20 kann sich danach zur nächsten Position weiterdrehen.

Im Zustand (b) hat sich der Schwenkarm 105 mit dem Hohlzylinder 109 sowie dem zweiten horizontalen Element 108 etwas nach rechts bewegt, und somit ist der Hohlzylinder 109 nicht mehr direkt mittig über der ersten Öffnung 104a des ersten horizontalen Elements 104.

Im Zustand (c), welcher der Position P1 gemäß obiger Definition entspricht, befindet sich das zweite horizontale Element 108 mit der zweiten Öffnung 108a sowie dem Hohlzylinder 109 direkt unterhalb des Magazins 20, so dass der unterste Prüfkörper P, welcher im Magazin 20 gelagert ist, direkt in den Hohlzylinder 109 rutschen kann. Der Hohlzylinder ist entsprechend zylindrisch und komplementär zu dem Prüfkörper P ausgebildet.

Im Zustand (d) bewegt sich der Schwenkarm 105 mit dem zweiten horizontalen Element 108 sowie dem Hohlzylinder 109 wieder etwas nach links. Ein nächster Prüfkörper P' hat sich nun nach unten bewegt.

Im Zustand (e) hat sich der Schwenkarm 105 mit dem zweiten horizontalen Element 108 sowie dem Hohlzylinder 109 noch etwas weiter nach links bewegt. Hier ist ersichtlich, dass der nächste Prüfkörper P' nun auf dem zweiten horizontalen Element 108 aufliegt, allerdings noch vom Magazin 20 gehalten ist und somit weder nach links noch nach rechts bewegt werden kann. Ein Fehlabwurf des Prüfkörpers P' ist also ausgeschlossen.

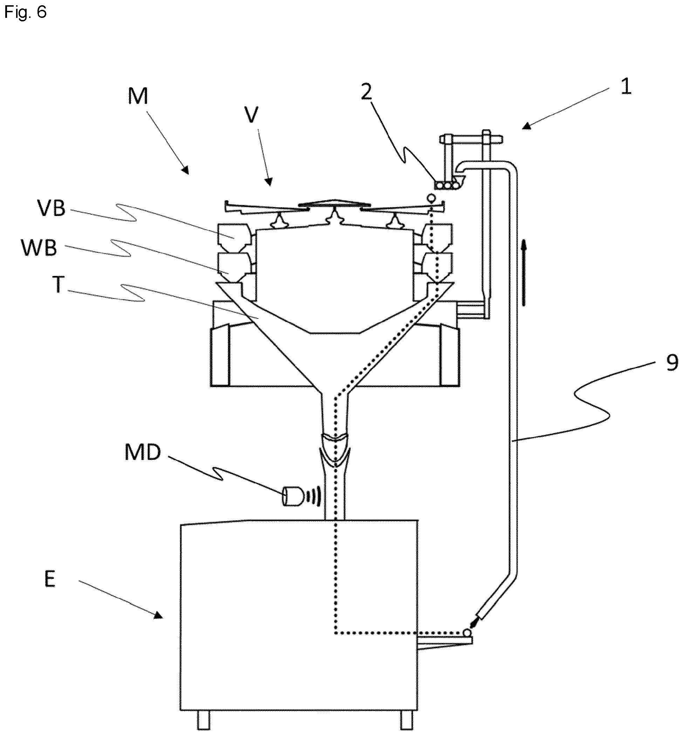

Fig. 6 zeigt eine komplette Multifunktionswaage M mit einer Abwurfvorrichtung 1 gemäß einer beliebigen Ausführungsform der vorliegenden Erfindung als Schnittansicht. Es ist ein Schnitt durch die Gesamteinheit aus Mehrkopfwaage M, Verteilteller V, Vorratsbehältern VB und darunter angeordneten Wägebehältern WB, Sammeltrichter T sowie Verpackungseinrichtung E gezeigt. Zwischen Sammeltrichter T und Verpackungseinrichtung E ist ein Metalldetektor MD vorhanden. Ferner ist der typische Weg des Produkts durch die Mehrkopfwaage und die Verpackungseinrichtung durch eine gepunktete Linie angedeutet.

Durch die Rückführvorrichtung 9 können aus der Verpackungseinheit E die Prüfkörper wieder zur Abwurfvorrichtung 1 zurückgeführt werden. Dies kann beispielsweise pneumatisch, magnetisch oder mechanisch geschehen. Somit können Prüfkörper nach dem Durchlauf des Metalldetektors MD und einem erfolgten Prüfvorgang dem Prozess wieder entnommen werden, und können somit wieder an ihren Ausgangspunkt zurückgefördert werden, also in das Magazin 2. Hiermit ist ein höherer Automatisierungsgrad bis zur Vollautomatisierung möglich, und Metall-Checks können auch über längere Zeiteinheiten geplant werden. Ferner trägt dies einer erhöhten Sicherheit zu.

Die vorliegende Erfindung ist nicht auf die oben beschriebenen Ausführungsformen beschränkt, sondern durch die nachfolgenden Ansprüche.

Beispielsweise kann das Magazin jede mögliche Form annehmen, es sind auch Polygone, Prismen oder ähnliche Formen möglich.

## Patentansprüche

1. Abwurfvorrichtung (1) für Prüfkörper (P) für Metelldetektionssysteme für Mehrkopfwaagen (M), aufweisend:
mindestens ein Magazin (2, 20), welches dazu angepasst ist, mindestens einen Prüfkörper (P) hierin aufzunehmen,
wobei im Magazin (2, 20) mindestens zwei Prüfkörperlageröffnungen (4, 4'; 40, 40') vorgesehen sind, welche sich durch das Magazin (2, 20) von oben nach unten erstrecken;
eine Begrenzungsvorrichtung (3), welche unterhalb des Magazins (2) angeordnet ist,
**dadurch gekennzeichnet, dass** die Begrenzungsvorrichtung (3) eine Aussparung (3a) aufweist, die mindestens den gleichen Querschnitt aufweist wie ein Prüfkörper (P); sowie dass die Abwurfvorrichtung (1) einen Antrieb (5) aufweist,
der dazu angepasst ist, das Magazin (2, 20) zu bewegen, so dass verschiedene Prüfkörperlageröffnungen (4, 4'; 40, 40') oberhalb der Aussparung (3a) der Begrenzungsvorrichtung (3) positioniert werden können.

2. Abwurfvorrichtung (1) gemäß Anspruch 1, wobei die mindestens zwei Prüfkörperlageröffnungen (4, 4a; 40, 40') so vorgesehen sind, dass deren Mittelpunkte auf einem Kreis liegen, und der Antrieb (5) dazu angepasst ist, das Magazin (2, 20) um den Kreismittelpunkt zu drehen.

3. Abwurfvorrichtung (1) gemäß Anspruch 1 oder 2, ferner mindestens einen ersten Sensor (6) aufweisend, welcher dazu angepasst ist, das Vorhandensein und/oder Eigenschaften von Prüfkörpern (P), die im Magazin (2, 20) vorgesehen sind, zu detektieren.

4. Abwurfvorrichtung (1) gemäß Anspruch 3, wobei der erste Sensor (6) ein optischer Distanzsensor ist, dessen Lichtstrahl vorzugsweise parallel zur Hauptachse des Magazins (2, 20) verläuft.

5. Abwurfvorrichtung (1) gemäß einem der vorherigen Ansprüche, ferner einen zweiten Sensor (7) aufweisend, der dazu angepasst ist, den Metallgehalt und/oder die Farbe der im Magazin (2, 20) lagernden Prüfkörper (P) zu detektieren.

6. Abwurfvorrichtung (1) gemäß einem der Ansprüche 3 bis 5, ferner eine Auswerteeinheit (10) aufweisend, welche dazu eingerichtet ist, die Signale des mindestens einen Sensors (6, 7) zu verarbeiten.

7. Abwurfvorrichtung (1) gemäß einem der vorhergehenden Ansprüche, wobei das Magazin (2, 20) mindestens eine seitliche Öffnung (2a, 20a) oder einen mindestens teilweise durchsichtigen Abschnitt aufweist, die/der dazu angepasst ist, eine optische Sichtprüfung des Füllstandes des Magazins (2, 20) zu ermöglichen.

8. Abwurfvorrichtung (1) gemäß einem der vorhergehenden Ansprüche, wobei das Magazin (2, 20) dazu angepasst ist, in einer Prüfkörperlageröffnung (4, 40) mehrere Prüfkörper (P) übereinander aufzunehmen.

9. Abwurfvorrichtung gemäß Anspruch 8, wobei an der Aussparung (3a) der Begrenzungsvorrichtung (3) eine Vereinzelungsvorrichtung (8) vorgesehen ist.

10. Abwurfvorrichtung gemäß Anspruch 9, wobei die Vereinzelungsvorrichtung (8) aufweist:
ein erstes horizontales Element (104) mit einer ersten Öffnung (104a), welche mindestens den Durchmesser eines Prüfkörpers (P) aufweist,
einen Schwenkarm (105), welcher mittels eines Antriebs (106) zwischen mindestens zwei Positionen bewegbar ist,
eine Transportvorrichtung (107) für Prüfkörper (P), welche mit dem Schwenkarm (105) verbunden ist, welche aufweist:
ein zweites horizontales Element (108), welches eine zweite Öffnung (108a) aufweist, welche mindestens den Durchmesser eines Prüfkörpers (P) aufweist, wobei unter der zweiten Öffnung (108a) eine Aufnahmevorrichtung (109) befestigt ist,
wobei sich in einer ersten Position (P1), welche der Schwenkarm (105) einnehmen kann, die zweite Öffnung (108a) des zweiten horizontalen Elements (108) unterhalb des Magazins (2, 20) befindet, so dass ein Prüfkörper (P) aus dem Magazin (2, 20) durch die zweite Öffnung (108a) des zweiten horizontalen Elements (108) in die Aufnahmevorrichtung (109) fallen kann,
wobei sich in einer zweiten Position (P2), welche der Schwenkarm (105) einnehmen kann, die Aufnahmevorrichtung (109) über der ersten Öffnung (104a) des ersten horizontalen Elements (104) befindet, so dass der sich in der Aufnahmevorrichtung (109) befindliche Prüfkörper (P) durch die erste Öffnung (104a) des ersten horizontalen Elements (104) abgeworfen werden kann,
wobei das zweite horizontale Element (108) in jeder, von der ersten Position (P1) verschiedenen Position des Schwenkarms (105) das Nachfallen von weiteren Prüfkörpern (P) aus dem Magazin (2, 20) verhindert.

11. System aus Abwurfvorrichtung (1) gemäß einem der Ansprüche 1-9, mindestens einem Prüfkörper (P) und einer Mehrkopfwaage (M), die unter anderem einen Verteilteller (V), mehrere Wägebehälter (WB), einen Sammeltrichter (T), eine Verpackungseinheit (E) sowie einen Metalldetektor (MD) sowie optional mehrere Vorratsbehälter (VB) aufweist,
wobei die Aussparung (3a) der Abwurfvorrichtung (1) über dem Verteilteller (V) oder einem Wägebehälter (WB) sowie optional Vorratsbehälter (VB) der Mehrkopfwaage (M) angeordnet ist,
und der Metalldetektor (MD) am oder nahe des Sammeltrichter(s) (T) oder der Verpackungseinheit (E) vorgesehen ist.

12. System aus Abwurfvorrichtung (1) gemäß Anspruch 10, mindestens einem Prüfkörper (P) und einer Mehrkopfwaage (M), die unter anderem einen Verteilteller (V), mehrere Wägebehälter (WB), einen Sammeltrichter (T), eine Verpackungseinheit (E) sowie einen Metalldetektor (MD) aufweist,
wobei die erste Öffnung (4a) des ersten horizontales Elements (4) der Abwurfvorrichtung (1) über dem Verteilteller (V) oder einem Wägebehälter (WB) der Mehrkopfwaage (M) angeordnet ist,
und der Metalldetektor (MD) am oder nahe des Sammeltrichter(s) (T) oder der Verpackungseinheit (E) vorgesehen ist.

13. Verfahren zum Prüfen eines Metalldetektors (MD) einer Mehrkopfwaage (M) oder einer Verpackungseinheit (E) mittels einer Abwurfvorrichtung gemäß einem der Ansprüche 1 bis 10, umfassend die folgenden Schritte:
a) Prüfen, ob im Magazin (2, 20) ein Prüfkörper (P) enthalten ist, optional, ob ein für den kommenden Abwurf vorgesehener Prüfkörper (P) enthalten ist;
b) falls in Schritt a) ein positives Ergebnis erzielt wird: Bewegen einer Prüfkörperlageröffnung (4, 40), welche einen Prüfkörper (P) enthält, über die Aussparung (3a); falls in Schritt a) ein negatives Ergebnis erzielt wird: Aufforderung zum Auffüllen des Magazins (2, 20);
c) Prüfen, ob der Metalldetektor (MD) der Mehrkopfwaage oder der Verpackungseinheit (E) den Prüfkörper (P) detektiert; Ausgabe und/oder Speichern eines positiven oder negativen Ergebnisses.

14. Verfahren zum Prüfen eines Metalldetektors (MD) einer Mehrkopfwaage (M) oder einer Verpackungseinheit (E) mittels einer Abwurfvorrichtung gemäß einem der Ansprüche 8 bis 10, umfassend die folgenden Schritte:
a) Prüfen, ob im Magazin (2, 20) mindestens eine Art von Prüfkörpern (P) in einer Prüfkörperlageröffnung (4, 40) enthalten ist, optional, ob ein für den kommenden Abwurf vorgesehener Prüfkörper (P) enthalten ist;
optional: Prüfen, ob im Magazin (2, 20) mindestens eine weitere Art von Prüfkörpern (P') in einer anderen Prüfkörperlageröffnung (4) enthalten ist;
b) Detektieren der Menge n an Prüfkörpern (P) in der einen Prüfkörperlageröffnung (4, 40);
optional: Detektieren der Menge m an Prüfkörpern (P') in der anderen Prüfkörperlageröffnung (4', 40');
c) Bewegen der einen Prüfkörperlageröffnung (4, 40), so dass diese oberhalb der Aussparung (3a) positioniert ist;
d) Abwerfen von Prüfkörpern (P) aus der einen Prüfkörperlageröffnung (4, 40) durch Betätigen der Vereinzelungsvorrichtung (8), wobei die Vereinzelungsvorrichtung (8) vorzugsweise n Mal betätigt wird, wobei zwischen den Abwürfen eine festgelegte Zeitspanne Δt liegt;
e) optional: Bewegen der anderen Prüfkörperlageröffnung (4', 40'), so dass diese oberhalb der Aussparung (3a) positioniert ist;
f) Abwerfen von Prüfkörpern (P') aus der anderen Prüfkörperlageröffnung (4, 40) durch Betätigen der Vereinzelungsvorrichtung (8), wobei die Vereinzelungsvorrichtung (8) vorzugsweise m Mal betätigt wird, wobei zwischen den Abwürfen eine festgelegte Zeitspanne Δt liegt.

15. Verfahren gemäß einem der Ansprüche 13 oder 14, wobei Prüfkörper (P) aus der Mehrkopfwaage (M) bzw. der Verpackungseinheit (E) mit einer Rückführvorrichtung (9) wieder zurück in die Abwurfvorrichtung (1) bzw. in ein Magazin (2, 20) hiervon befördert werden.

## Claims

1. Dropping device (1) for test specimens (P) for detection systems (M) for multi-head weighing machines, comprising:
at least one magazine (2, 20) adapted to receive at least one test specimen (P) therein,
wherein at least two test specimen storage openings (4, 4'; 40, 40') are provided in the magazine (2, 20), which openings extend through the magazine (2, 20) from top to bottom;
a limiting device (3) arranged below the magazine (2),
**characterized in that** the limiting deice (3) has a recess (3a) having at least the same cross-section as a test specimen (P); and that the dropping device (1) contains a drive (5) adapted to move the magazine (2, 20) so that different test specimen storage openings (4, 4'; 40, 40') can be positioned above the recess (3a) of the limiting device (3).

2. Dropping device (1) according to claim 1, wherein the at least two test specimen storage openings (4, 4a; 40, 40') are provided such that their centres of gravity lie on a circle, and the drive (5) is adapted to rotate the magazine (2, 20) around the centre of the circle.

3. Dropping device (1) according to claim 1 or 2, further comprising at least a first sensor (6) adapted to detect the presence and/or characteristics of test specimens (P) provided in the magazine (2, 20).

4. Dropping device (1) according to claim 3, wherein the first sensor (6) is an optical distance sensor whose light beam preferably runs parallel to the main axis of the magazine (2, 20).

5. Dropping device (1) according to any one of the preceding claims, further comprising a second sensor (7) adapted to detect the metal content and/or the colour of the test specimens (P) stored in the magazine (2, 20).

6. Dropping device (1) according to one of the claims 3 to 5, further comprising an evaluation unit (10) which is set up to process the signals of the at least one sensor (6, 7).

7. Dropping device (1) according to any one of the preceding claims, wherein the magazine (2, 20) has at least one lateral opening (2a, 20a) or at least partially transparent portion adapted to allow visual inspection of the filling level of the magazine (2, 20).

8. Dropping device (1) according to any one of the preceding claims, wherein the magazine (2, 20) is adapted to receive a plurality of test specimens (P) one above the other in a test specimen storage opening (4, 40).

9. Dropping device (1) according to claim 8, wherein a separating device (8) is provided at the recess (3a) of the limiting device (3).

10. Dropping device according to claim 9, wherein the separating device (8) comprises:
a first horizontal element (104) with a first opening (104a) having at least the diameter of a test specimen (P),
a pivot arm (105) which is movable between at least two positions by means of a drive (106),
a transport device (107) for test specimens (P), which is connected to the pivot arm (105), comprising:
a second horizontal element (108) having a second opening (108a) having at least the diameter of a test specimen (P), wherein a receiving device (109) is mounted below the second opening (108a),
wherein, in a first position (P1) which the pivot arm (105) can assume, the second opening (108a) of the second horizontal member (108) is located below the magazine (2, 20) so that a test specimen (P) can fall from the magazine (2, 20) through the second opening (108a) of the second horizontal member (108) into the receiving device (109),
wherein in a second position (P2) which the pivot arm (105) can assume,
the receiving device (109) is located above the first opening (104a) of the first horizontal member (104) so that the test specimen (P) located in the receiving device (109) can be dropped through the first opening (104a) of the first horizontal member (104),
wherein the second horizontal element (108) prevents further test specimens (P) from falling out of the magazine (2, 20) in any position of the pivot arm (105) other than the first position (P1).

11. System comprising a dropping device (1) according to any one of claims 1 to 9, at least one test specimen (P) and a multi-head weighing machine (M), which comprises, inter alia, a distribution plate (V), a plurality of weighing containers (WB), a collection hopper (T), a packaging unit (E) as well as a metal detector (MD) and optionally a plurality of storage containers (VB), wherein the recess (3a) of the dropping device (1) is arranged above the distribution plate (V) or a weighing container (WB) and optionally storage container (VB) of the multi-head weighing machine (M),
and the metal detector (MD) is provided at or near the collection hopper(s) (T) or packaging unit (E).

12. System comprising a dropping device (1) according to claim 10, at least one test specimen (P) and a multi-head weighing machine (M), which comprises, inter alia, a distribution plate (V), a plurality of weighing containers (WB), a collection hopper (T), a packaging unit (E) as well as a metal detector (MD), wherein the first opening (4a) of the first horizontal element (4) of the dropping device (1) is arranged above the distribution plate (V) or a weighing container (WB) of the multi-head weighing machine (M),
and the metal detector (MD) is provided at or near the collection hopper(s) (T) or packaging unit (E).

13. A method of testing a metal detector (MD) of a multi-head weighing machine (M) or a packaging unit (E) by means of a dropping device according to any one of claims 1 to 10, comprising the following steps:
a) Checking whether the magazine (2, 20) contains a test specimen (P), optionally whether it contains a test specimen (P) intended for the upcoming drop;
b) if a positive result is obtained in step a): Moving a test specimen storage opening (4, 40) containing a test specimen (P) over the recess (3a); if a negative result is obtained in step a): Request to refill the magazine (2, 20);
c) Checking whether the metal detector (MD) of the multi-head weighing machine or the packaging unit (E) detects the test specimen (P); outputting and/or storing a positive or negative result.

14. A method of testing a metal detector (MD) of a multi-head weighing machine (M) or a packaging unit (E) by means of a dropping device according to any one of claims 8 to 10, comprising the following steps:
a) Checking whether the magazine (2, 20) contains at least one type of test specimen (P) in a test specimen storage opening (4, 40), optionally whether a test specimen (P) intended for the upcoming dropping is contained;
optionally: checking whether the magazine (2, 20) contains at least one other type of test specimen (P') in another test specimen storage opening (4);
b) Detecting the quantity n of test specimens (P) in the one test specimen storage opening (4, 40);
optionally: detection of the quantity m of test specimens (P') in the other test specimen storage opening (4', 40');
c) Moving the one test specimen strorage opening (4, 40) so that it is positioned above the recess (3a);
d) Dropping of test specimens (P) from the one test specimen storage opening (4, 40) by actuation of the separating device (8), wherein the separating device (8) is preferably actuated n times, wherein a fixed time period Δt lies between the droppings;
e) optionally: moving the other test specimen storage opening (4', 40') so that it is positioned above the recess (3a);
f) Dropping of test specimens (P') from the other test specimen storage opening (4, 40) by actuation of the separating device (8), wherein the separating device (8) is preferably actuated m times, wherein a fixed time interval Δt lies between the droppings.

15. A method according to any one of claims 13 or 14, wherein test specimens (P) from the multi-head weighing machine (M) or the packaging unit (E), respectively, are conveyed back into the dropping device (1) or into a magazine (2, 20) thereof, respectively, by means of a return device (9).

## Revendications

1. Dispositif d'éjection (1) pour des corps d'essai (P) pour des systèmes de détection de métaux pour des balances à têtes multiples (M), présentant :
au moins un magasin (2, 20), lequel est adapté pour recevoir à l'intérieur au moins un corps d'essai (P),
dans lequel au moins deux ouvertures de palier de corps d'essai (4, 4' ; 40, 40') sont prévues dans le magasin (2, 20), lesquelles s'étendent à travers le magasin (2, 20) de haut en bas ;
un dispositif de limitation (3) qui est agencé en dessous du magasin (2),
**caractérisé en ce que** le dispositif de limitation (3) présente un évidement (3a) qui présente au moins la même section transversale qu'un corps d'essai (P) ; ainsi que le dispositif d'éjection (1) présente un entraînement (5) qui est adapté afin de déplacer le magasin (2, 20) de sorte que différentes ouvertures de palier de corps d'essai (4, 4' ; 40, 40') puissent être positionnées au-dessus de l'évidement (3a) du dispositif de limitation (3).

2. Dispositif d'éjection (1) selon la revendication 1, dans lequel les au moins deux ouvertures de palier de corps d'essai (4, 4a ; 40, 40') sont prévues de sorte que leurs points médians se situent sur un cercle, et l'entraînement (5) est adapté afin de tourner le magasin (2, 20) autour du point médian du cercle.

3. Dispositif d'éjection (1) selon la revendication 1 ou 2, présentant en outre au moins un premier capteur (6) qui est adapté afin de détecter la présence et/ou les propriétés de corps d'essai (P) qui sont prévus dans le magasin (2, 20).

4. Dispositif d'éjection (1) selon la revendication 3, dans lequel le premier capteur (6) est un capteur de distance optique, dont le faisceau de lumière s'étend de préférence de manière parallèle par rapport à l'axe principal du magasin (2, 20).

5. Dispositif d'éjection (1) selon l'une quelconque des revendications précédentes, présentant en outre un deuxième capteur (7) qui est adapté afin de détecter la teneur en métal et/ou la couleur des corps d'essai (P) logeant dans le magasin (2, 20).

6. Dispositif d'éjection (1) selon l'une quelconque des revendications 3 à 5, présentant en outre une unité d'évaluation (10) qui est conçue afin de traiter les signaux de l'au moins un capteur (6, 7).

7. Dispositif d'éjection (1) selon l'une quelconque des revendications précédentes, dans lequel le magasin (2, 20) présente au moins une ouverture latérale (2a, 20a) ou une section au moins en partie translucide qui est adaptée pour permettre une inspection visuelle optique de l'état de remplissage du magasin (2, 20).

8. Dispositif d'éjection (1) selon l'une quelconque des revendications précédentes, dans lequel le magasin (2, 20) est adapté afin de recevoir dans une ouverture de palier de corps d'essai (4, 40) plusieurs corps d'essai (P) les uns au-dessus des autres.

9. Dispositif d'éjection selon la revendication 8, dans lequel un dispositif de séparation (8) est prévu au niveau de l'évidement (3a) du dispositif de limitation (3).

10. Dispositif d'éjection selon la revendication 9, dans lequel le dispositif de séparation (8) présente :
un premier élément horizontal (104) avec une première ouverture (104a), laquelle présente au moins le diamètre d'un corps d'essai (P),
un bras pivotant (105), lequel peut être déplacé entre au moins deux positions au moyen d'un entraînement (106),
un dispositif de transport (107) pour des corps d'essai (P), lequel est relié au bras pivotant (105), lequel présente :
un deuxième élément horizontal (108), lequel présente une deuxième ouverture (108a), laquelle présente au moins le diamètre d'un corps d'essai (P), dans lequel est fixé sous la deuxième ouverture (108a) un dispositif de logement (109),
dans lequel la deuxième ouverture (108a) du deuxième élément horizontal (108) se trouve sous le magasin (2, 20) dans une première position (P1) que le bras pivotant (105) peut adopter de sorte qu'un corps d'essai (P) peut tomber dans le dispositif de logement (109) hors du magasin (2, 20) par la deuxième ouverture (108a) du deuxième élément horizontal (108),
dans lequel le dispositif de logement (109) se trouve au-dessus de la première ouverture (104a) du premier élément horizontal (104) dans une deuxième position (P2) que le bras pivotant (105) peut adopter de sorte que le corps d'essai (P) se trouvant dans le dispositif de logement (109) peut être éjecté par la première ouverture (104a) du premier élément horizontal (104),
dans lequel le deuxième élément horizontal (108) empêche, dans chaque position, autre que la première position (P1), du bras pivotant (105), la chute ultérieure d'autres corps d'essai (P) hors du magasin (2, 20).

11. Système composé d'un dispositif d'éjection (1) selon l'une quelconque des revendications 1 à 9, d'au moins un corps d'essai (P) et d'une balance à têtes multiples (M), qui présente entre autres un plateau de distribution (V), plusieurs contenants de pesage (WB), une trémie de collecte (T), une unité d'emballage (E) ainsi qu'un détecteur de métaux (MD) ainsi qu'en option plusieurs réservoirs (VB),
dans lequel l'évidement (3a) du dispositif d'éjection (1) est disposé au-dessus du plateau de distribution (V) ou d'un contenant de pesage (WB) ainsi qu'en option des réservoirs (VB) de la balance à têtes multiples (M),
et le détecteur de métaux (MD) est prévu sur ou à proximité de la trémie de collecte (T) ou de l'unité d'emballage (E).

12. Système composé d'un dispositif d'éjection (1) selon la revendication 10, d'au moins un corps d'essai (P) et d'une balance à têtes multiples (M), qui présente entre autres un plateau de distribution (V), plusieurs contenants de pesage (WB), une trémie de collecte (T), une unité d'emballage (E) ainsi qu'un détecteur de métaux (MD),
dans lequel la première ouverture (4a) du premier élément horizontal (4) du dispositif d'éjection (1) est disposée au-dessus du plateau de distribution (V) ou d'un contenant de pesage (WB) de la balance à têtes multiples (M),
et le détecteur de métaux (MD) est prévu sur ou à proximité de la trémie de collecte (T) ou de l'unité d'emballage (E).

13. Procédé pour tester un détecteur de métaux (MD) d'une balance à têtes multiples (M) ou d'une unité d'emballage (E) au moyen d'un dispositif d'éjection selon l'une quelconque des revendications 1 à 10, comprenant les étapes suivantes :
a) vérification si un corps d'essai (P) est contenu dans le magasin (2, 20), en option si un corps d'essai (P) prévu pour l'éjection à venir est contenu ;
b) si un résultat positif est atteint lors de l'étape a) : déplacement d'une ouverture de palier de corps d'essai (4, 40) qui contient un corps d'essai (P), au-dessus de l'évidement (3a) ; si un résultat négatif est obtenu lors de l'étape a) : demande de remplissage du magasin (2, 20) ;
c) vérification si le détecteur de métaux (MD) de la balance à têtes multiples ou de l'unité d'emballage (E) détecte le corps d'essai (P) ; envoi et/ou mémorisation d'un résultat positif ou négatif.

14. Procédé pour tester un détecteur de métaux (MD) d'une balance à têtes multiples (M) ou d'une unité d'emballage (E) au moyen d'un dispositif d'éjection selon l'une quelconque des revendications 8 à 10, comprenant les étapes suivantes :
a) vérification si au moins un type de corps d'essai (P) est contenu dans le magasin (2, 20) dans une ouverture de palier de corps d'essai (4, 40), en option si un corps d'essai (P) prévu pour l'éjection à venir est contenu ;
en option : vérification si au moins un autre type de corps d'essai (P') est contenu dans le magasin (2, 20) dans une autre ouverture de palier de corps d'essai (4) ;
b) détection de la quantité n de corps d'essai (P) dans l'une ouverture de palier de corps d'essai (4, 40) ;
en option : détection de la quantité m de corps d'essai (P') dans l'autre ouverture de palier de corps d'essai (4', 40') ;
c) déplacement de l'une ouverture de palier de corps d'essai (4, 40) de sorte que celle-ci soit positionnée au-dessus de l'évidement (3a) ;
d) éjection de corps d'essai (P) de l'une ouverture de palier de corps d'essai (4, 40) par actionnement du dispositif de séparation (8), dans lequel le dispositif de séparation (8) est actionné de préférence n fois, dans lequel un intervalle déterminé Δt se situe entre les éjections ;
e) en option : déplacement de l'autre ouverture de palier de corps d'essai (4', 40') de sorte que celle-ci soit positionnée au-dessus de l'évidement (3a) ;
f) éjection de corps d'essai (P') de l'autre ouverture de palier de corps d'essai (4, 40) par actionnement du dispositif de séparation (8), dans lequel le dispositif de séparation (8) est actionné de préférence m fois, dans lequel un intervalle déterminé Δt se situe entre les éjections.

15. Procédé selon l'une quelconque des revendications 13 ou 14, dans lequel des corps d'essai (P) sont transportés de nouveau de la balance à têtes multiples (M) ou de l'unité d'emballage (E) avec un dispositif de retour (9) dans le dispositif d'éjection (1) ou dans un magasin (2, 20) de celui-ci.
